# EUROPÄISCHE PATENTSCHRIFT

(11) **EP 3 857 165 B1**
(45) Veröffentlichungstag und Bekanntmachung des Hinweises auf die Patenterteilung: **26.03.2025**
(21) Anmeldenummer: 18778445.9
(22) Anmeldetag: 24.09.2018
(51) Int. Cl.: G01B 11/16

(54) **DATENHANDSCHUH UND VERFAHREN ZUR STEUERUNG EINES COMPUTERPROGRAMMS MIT DIESEM DATENHANDSCHUH**
DATA GLOVE AND METHOD FOR CONTROLLING A COMPUTER PROGRAM WITH THIS DATA GLOVE
GANT DE DONNÉES ET PROCÉDÉ DE CONTRÔLE D'UN PROGRAMME INFORMATIQUE AVEC CE GANT DE DONNÉES

(43) Veröffentlichungstag der Anmeldung: 04.08.2021
(73) Patentinhaber: Fraunhofer-Gesellschaft zur Förderung der angewandten Forschung e.V., 80686 München (DE)
(72) Erfinder: ANGELMAHR, Martin, 38644 Goslar (DE); SCHADE, Wolfgang, 38644 Goslar (DE)
(74) Vertreter: Friese Goeden Patentanwälte PartGmbB
(86) Internationale Anmeldenummer: PCT/EP2018/075799
(87) Internationale Veröffentlichungsnummer: WO 2020/064084

(56) Entgegenhaltungen:
- DE-A1- 102006 055 588
- US-A1- 2014 036 261
- US-A1- 2016 166 130
- US-A1- 2018 200 000

## Beschreibung

Die Erfindung betrifft einen faseroptischen Sensor zur Erfassung einer Krümmung eines Gegenstandes, mit zumindest einer Lichtquelle, zumindest einer optischen Faser und zumindest einem Empfänger. Weiterhin betrifft die Erfindung einen mit einem solchen Sensor ausgestatteten Gegenstand, beispielsweise einen Datenhandschuh oder ein Endoskop. Schließlich betrifft die Erfindung ein Verfahren zur Erfassung einer Krümmung eines Gegenstandes, bei welchem Licht aus zumindest einer Lichtquelle in zumindest eine optische Faser eingekoppelt und mit zumindest einem Empfänger ausgewertet wird.

Aus der US 2007/0297712 A1 ist ein gattungsgemäßer faseroptischer Sensor bekannt. Dieser besteht aus einer optischen Faser, welche einen Mantel und eine Mehrzahl von Kernen aufweist. Licht wird in die Kerne der optischen Faser eingekoppelt und propagiert durch Totalreflexion an den Grenzflächen zwischen Kern und Mantel entlang der optischen Faser. In den Kernen befinden sich Bragg-Gitter, welche eine von der jeweiligen Gitterkonstanten abhängige Wellenlänge reflektieren und Licht im Übrigen transmittieren. Bei Krümmung der optischen Faser werden diese Bragg-Gitter gedehnt oder gestaucht, sodass sich deren Gitterkonstante ändert. Durch Bestimmung der im jeweiligen Kern reflektierten Wellenlänge lässt sich somit die Krümmung der optischen Faser bestimmen.

Diese bekannte Vorrichtung weist jedoch den Nachteil auf, dass zur Auswertung der Wellenlänge aufwendige Spektrometer benötigt werden. Diese erhöhen den technischen Aufwand, vergrößern den zur Auslese benötigten Bauraum und reduzieren die Betriebssicherheit.

US 4,414,537 A offenbart eine Mensch-Maschine-Schnittstelle zur Umsetzung von verschiedenen Handpositionen in elektrische Signale, wobei diese Schnittstelle aus einem Handschuh mit Sensoren besteht, die über die Hand verteilt sind, um die Beugung der Fingergelenke zu erfassen.

US 2018/0200000 A1 offenbart ein Endoskop mit einem faseroptischen Sensor zur Erfassung einer Krümmung eines biegsamen Längsabschnitts des Endoskops.

Ausgehend vom Stand der Technik besteht somit ein Bedürfnis, die Krümmung eines Gegenstandes zuverlässiger und mit geringerem Aufwand zu bestimmen.

Die Aufgabe wird erfindungsgemäß durch einen Datenhandschuh gemäß Anspruch 1 und ein Verfahren nach Anspruch 12 gelöst. Vorteilhafte Weiterbildungen der Erfindung finden sich in den Unteransprüchen.

Erfindungsgemäß wird ein Datenhandschuh mit zumindest einem faseroptischen Sensor zur Digitalisierung der Bewegung der Finger vorgeschlagen. Der faseroptische Sensor weist zumindest eine Lichtquelle auf, welche elektromagnetische Strahlung einer vorgebbaren Wellenlänge aussendet. In einigen Ausführungsformen der Erfindung kann die Lichtquelle eine Leuchtdiode, eine Superlumineszenzdiode oder ein Halbleiterlaser sein bzw. solche Elemente enthalten. In anderen Ausführungsformen der Erfindung kann die Lichtquelle ein Display sein, welches eine Mehrzahl von Pixeln aufweist, welche Licht einer vorgebbaren Wellenlänge bzw. einer vorgebbaren Wellenlängenverteilung aussenden.

In einigen Ausführungsformen der Erfindung kann die Lichtquelle monochromatisch sein, d. h. die Lichtquelle sendet Licht einer einzigen Wellenlänge oder einer schmalen Wellenlängenverteilung aus. In andere Ausführungsformen der Erfindung kann die Lichtquelle eine breitbandige Strahlung erzeugen, deren Wellenlängenverteilung beispielsweise eine Halbwertsbreite zwischen etwa 50 nm und etwa 150 nm aufweist. In wiederum anderen Ausführungsformen der Erfindung kann die Lichtquelle mehrere diskrete Wellenlängen erzeugen.

Die Lichtquelle kann elektromagnetische Strahlung des sichtbaren Spektralbereichs aussenden. In anderen Ausführungsformen der Erfindung kann die Lichtquelle infrarote Strahlung erzeugen. In wiederum anderen Ausführungsformen der Erfindung kann die Lichtquelle ultraviolette Strahlung erzeugen. In einigen Ausführungsformen der Erfindung kann die Lichtquelle auch infrarote und sichtbare oder sichtbare und ultraviolette Strahlung erzeugen, insbesondere wenn die Lichtquelle dazu eingerichtet und bestimmt ist, eine Mehrzahl diskreter, spektral voneinander getrennter Wellenlängen zu erzeugen.

Erfindungsgemäß wird vorgeschlagen, das aus der Lichtquelle austretende Licht in zumindest eine optische Faser einzukoppeln. Die optische Faser kann in einigen Ausführungsformen einen Kern und einen den Kern umgebenden Mantel aufweisen. Dabei weist der Kern einerseits und der Mantel andererseits unterschiedliche Brechungsindizes auf, sodass in den Kern eingekoppeltes Licht an der Grenzfläche zwischen Kern und Mantel total reflektiert wird.

In anderen Ausführungsformen der Erfindung kann die optische Faser lediglich einen Kern ohne umgebenden Mantel aufweisen. In diesem Fall erfolgt die Totalreflexion an der Grenzfläche zwischen dem Kern und der den Kern umgebenden Atmosphäre.

Das in der optischen Faser propagierende Licht wird zumindest einem Empfänger zugeführt. Der Empfänger ist dazu eingerichtet, die Intensität eintreffendes Lichtes zu erfassen. In einigen Ausführungsformen der Erfindung können mehrere Empfänger vorhanden sein, welche jeweils die Intensität einer vorgebbaren Wellenlänge bzw. eines Wellenlängenbereiches erfassen. In einigen Ausführungsformen der Erfindung kann der Empfänger hierzu eine Photodiode, ein Photowiderstand oder ein Phototransistor sein bzw. ein solches Element enthalten. In anderen Ausführungsformen der Erfindung kann der Empfänger ein Photodiodenarray mit einer Mehrzahl einzeln auslesbarer Photodioden sein.

In einigen Ausführungsformen der Erfindung kann der Empfänger ein Bildsensor sein, welcher entweder als Zeilensensor oder als zweidimensionaler Flächensensor ausgeführt ist. Ein solcher Bildsensor kann eine Mehrzahl von Pixeln aufweisen, welche jeweils dazu eingerichtet sind, die Intensität auftreffender Strahlung zu erfassen. In einigen Ausführungsformen der Erfindung können die Pixel ihrerseits in Subpixel unterteil sein, welche die Intensität eintreffender Strahlung in vorgebbaren, voneinander verschiedenen Wellenlängenbereichen erfassen. Hierzu kann der Empfänger ein oder mehrere Filterelemente aufweisen, welche Licht einer vorgebbaren Wellenlänge bzw. eines vorgebbaren Wellenlängenbereiches transmittieren und andere Strahlung absorbieren.

Erfindungsgemäß weist die optische Faser zumindest einen Längsabschnitt auf, in welchem die Brechzahl für Licht einer vorgebbaren Wellenlänge gegenüber den verbleibenden Längsabschnitten reduziert ist. Dieses Merkmal hat die Wirkung, dass bei einer Krümmung zumindest des Längsabschnittes der optischen Faser die Totalreflexion wellenlängenselektiv reduziert ist. So erfährt in dem Längsabschnitt das Licht der vorgebbaren Wellenlänge eine verstärkte Auskopplung im Falle einer Krümmung der optischen Faser in diesem Längsabschnitt. Die Intensität des Lichtes der vorgebbaren Wellenlänge nimmt somit mit zunehmender Krümmung der optischen Faser ab. Licht einer anderen Wellenlänge kann jedoch weiterhin nahezu verlustfrei durch Totalreflexion an der Grenzfläche propagieren. Anders als bei bekannten faseroptischen Sensoren ist somit zur Bestimmung der Krümmung nicht erforderlich, die Wellenlänge des reflektierten Lichtes zu erfassen.

Vielmehr ist es ausreichend, lediglich die Intensität transmitierten Lichtes zu bestimmen. Die Bestimmung der Intensität ist jedoch wesentlich einfacher und zuverlässiger möglich als die Bestimmung der Wellenlänge, sodass der erfindungsgemäße faseroptische Sensor mit geringerem apparativen Aufwand auskommt. Hierdurch wird der erforderliche Bauraum reduziert und die Betriebssicherheit erhöht.

In einigen Ausführungsformen der Erfindung kann die optische Faser in dem zumindest einen Längsabschnitt einen geringeren Durchmesser aufweisen. Hierdurch kann der Grad der Totalreflexion zusätzlich reduziert werden, sodass das Signal-/Rauschverhältnis vergrößert und die Messung der Krümmung genauer wird.

Gemäß der Erfindung erfolgt die Reduktion der Brechzahl durch Teilbeschichtung einer Außenfläche der optischen Faser.

Die Teilbeschichtung wird zumindest an der Außenseite der Krümmung des Längsabschnittes aufgebracht, in welchem die Brechzahl für Licht einer vorgebbaren Wellenlänge reduziert ist. Durch die Wahl des Beschichtungsmaterial sowie Ort und Größe der beschichteten Teilfläche können in einfacher Weise diejenigen Orte der optischen Faser ausgewählt werden, deren Krümmung bestimmt bzw. überwacht werden soll.

In einigen Ausführungsformen der Erfindung kann die Teilbeschichtung Nanopartikel enthalten oder daraus bestehen. Diese können durch Gasphasenabscheidung oder durch Bindemittel auf der Außenseite der optischen Faser aufgebracht sein. Durch Wahl des Materials und des Durchmessers der Nanopartikel kann die vorgebbare Wellenlänge ausgewählt werden, für welche die Brechzahl an vorgebbaren Orten der optischen Faser reduziert werden soll.

In einigen Ausführungsformen der Erfindung kann die Teilbeschichtung Nanopartikel enthalten oder daraus bestehen, welche Gold enthalten oder daraus bestehen. Solche Nanopartikel lassen sich einfach erzeugen und durch Variation der Größe kann die gewünschte, vorgebbare Wellenlänge in weitem Umfang festgelegt werden.

In einigen Ausführungsformen der Erfindung kann die Teil¬beschich¬tung Nanopartikel enthalten oder daraus bestehen, welche einen Durchmesser von etwa 1 nm bis etwa 300 nm oder von etwa 50 nm bis etwa 200 nm oder von etwa 125 nm bis etwa 175 nm aufweisen.

In einigen Ausführungsformen der Erfindung kann die optische Faser eine Multimodefaser sein. Dies erleichtert die Realisierung einer Mehrzahl von Messorten entlang der Längserstreckung der optischen Faser, wobei einzelne Messorte der Krümmung anhand der Wellenlänge unterschieden werden können. In anderen Ausführungsformen der Erfindung kann die optische Faser eine Singlemodefaser sein.

In einigen Ausführungsformen der Erfindung kann die optische Faser eine Polymerfaser sein. Eine solche Polymerfaser weist gegenüber einer Glasfaser den Vorteil auf, dass diese eine größere absolute Dehnbarkeit aufweist. In einigen Ausführungsformen der Erfindung kann die Dehnbarkeit größer als etwa 5 % oder größer als etwa 10 % oder größer als etwa 15 % sein. Hierdurch kann ein größerer Messbereich realisiert werden als mit anderen Wellenleitern, beispielsweise Glasfasern.

In einigen Ausführungsformen der Erfindung kann die optische Faser eine Bifurkation aufweisen. Dies erlaubt es, den Empfänger und die Lichtquelle am selben Ende der optischen Faser anzuordnen, sodass die gesamte Signalerzeugung und - verarbeitung platzsparend aufgebaut werden kann, beispielsweise zusammen mit der Auswerte- und Steuerungselektronik auf einem einzigen Schaltungsträger.

Die Bifurkation kann in einigen Ausführungsformen der Erfindung in Form eines Schmelzkopplers, eines Faserkopplers oder eines 3dB-Kopplers ausgeführt sein.

In einigen Ausführungsformen der Erfindung kann ein Ende der optischen Faser verspiegelt sein. Hierdurch wird Licht von einem Ende der Faser zum anderen Ende der Faser zurückreflektiert, sodass Sender und Empfänger an einem Ende der Faser angeordnet sein können. Darüber hinaus propagiert das Licht mehrfach durch die optische Faser, sodass ein größerer Teil an den gekrümmten Teilflächen ausgekoppelt wird und das Signal-/Rauschverhältnis weiter steigt.

In der Erfindung wird der erfindungsgemäße faseroptische Sensor in einem Datenhandschuh eingesetzt. Bei Anwendung in einem Datenhandschuh kann die erfindungsgemäß verwendete optische Faser durch Einweben, Kleben oder Schweißen auf einem Gewebe oder Gestricke eines Textilhandschuhs befestigt werden. Um die Bewegung von drei Gelenken pro Finger zu erfassen, sind in dieser Ausführungsform der Erfindung in jeder optischen Faser drei Messstellen realisiert, welche jeweils durch unterschiedliche Teilbeschichtung der Außenseite der optischen Faser realisiert sind. Die jeweilige Teilbeschichtung bewirkt eine Reduktion der Brechzahl für Licht einer jeweils vorgebbaren Wellenlänge, wobei für jedes Gelenk eine unterschiedliche Wellenlänge gewählt wird. Auf diese Weise können im Wellenlängenmultiplex die Krümmungen der einzelnen Fingergelenke unterschieden und separat erfasst werden.

Nachfolgend soll die Erfindung anhand von Figuren ohne Beschränkung des allgemeinen Erfindungsgedankens näher erläutert werden. Dabei zeigt
- Figur 1: einen faseroptischen Sensor gemäß einer ersten Ausführungsform der Erfindung.
- Figur 2: zeigt einen faseroptischen Sensor gemäß einer zweiten Ausführungsform der Erfindung.
- Figur 3: zeigt die Ankopplung einer optischen Faser an eine Lichtquelle.
- Figur 4: zeigt einen mit dem erfindungsgemäßen Sensor ausgestatteten Datenhandschuh.

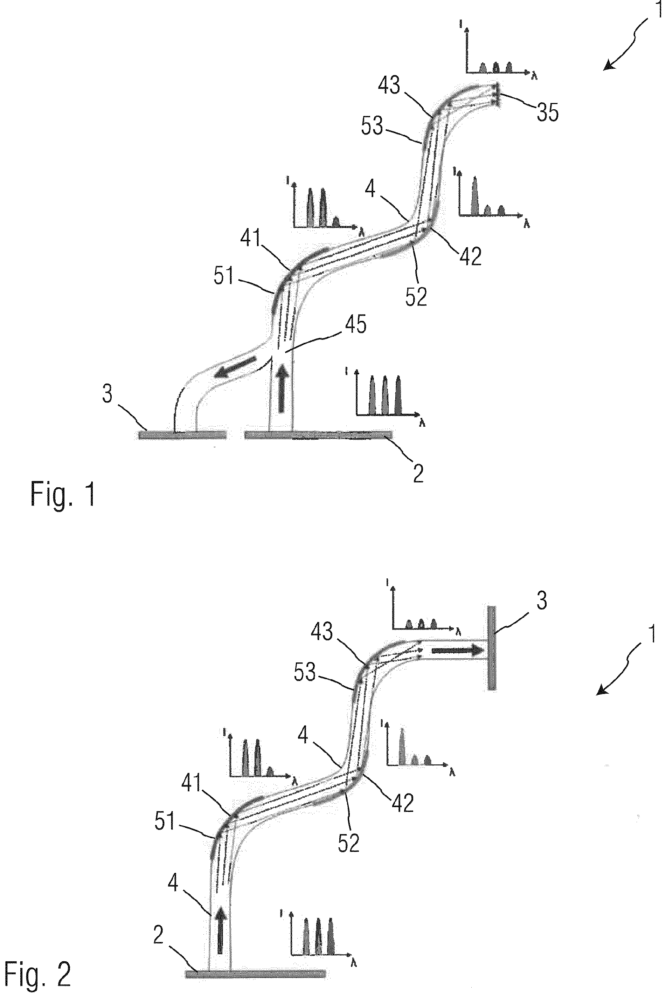

Anhand der Figur 1 wird eine erste Ausführungsform eines erfindungsgemäßen faseroptischen Sensors erläutert. Der faseroptische Sensor 1 weist zumindest eine Lichtquelle 2, eine optische Faser 4 sowie einen Empfänger 3 auf. Zumindest ein Längsabschnitt 41, 42, 43 der optischen Faser 4 ist mit einer Teilbeschichtung 51, 52, 53 versehen, welche die Brechzahl für Licht einer vorgebbaren Wellenlänge gegenüber den verbleibenden Längsabschnitten der optischen Faser 4 reduziert. Im dargestellten Ausführungsbeispiel sind drei Längsabschnitte 41, 42 und 43 dargestellt, welche jeweils mit einer unterschiedlichen Teilbeschichtung 51, 52 und 53 versehen sind, welche die Brechzahl für Licht jeweils unterschiedlicher Wellenlängen reduziert und Licht anderer Wellenlängen im Wesentlichen unbeeinflusst lässt.

Zur Erläuterung der Funktionsweise der Erfindung werden die drei vorgebbaren Wellenlängen mit den verbalen Bezeichnungen "rot", "grün" und "blau" bezeichnet. Dies bedeutet jedoch nicht, dass in sämtlichen Ausführungsformen der Erfindung die vorgebbaren Wellenlängen zwingend aus dem sichtbaren Spektralbereich gewählt werden müssen. Denkbar ist auch, dass in anderen Ausführungsformen der Erfindung drei Wellenlängen bzw. Wellenlängenbereiche aus dem infraroten Spektralbereich oder dem ultravioletten Spektralbereich gewählt werden. In einigen Ausführungsformen der Erfindung können die vorgebbaren Wellenlängen auch teilweise sichtbar und teilweise infrarot oder ultraviolett sein. Die nachfolgende Beschreibung ist sofern lediglich erläuternd, nicht als beschränkend zu verstehen. Selbstverständlich lehrt die Erfindung nicht die Verwendung von genau drei vorgebbaren Wellenlängen als Lösungsprinzip. Die Anzahl der Wellenlängen und damit die Anzahl der Messorte zur Erfassung der Krümmung können in anderen Ausführungsformen der Erfindung auch größer oder geringer sein und zwischen 1 und etwa 10 betragen.

Bei Betrieb des erfindungsgemäßen faseroptischen Sensors erzeugt die Lichtquelle 2 Licht, welches zumindest eine vorgebbare Wellenlänge aufweist. In einigen Ausführungsformen der Erfindung kann die Lichtquelle 2 eine breite spektrale Verteilung emittieren, welche alle genutzten, vorgebbaren Wellenlängen für alle Messorte entlang der optischen Faser aufweist. In anderen Ausführungsformen der Erfindung kann die Lichtquelle 2 diskrete Wellenlängen aussenden. Wie das in Figur 1 dargestellte Spektrum zeigt, sendet im dargestellten Ausführungsbeispiel die Lichtquelle 2 drei Wellenlängen bzw. vergleichsweise schmale Wellenlängenbereiche aus, welche den vorgebbaren Wellenlängen rot, grün und blau entsprechen. Hierzu ist in Figur 1 die Intensität auf der Ordinate gegen die Wellenlänge λ auf der Abszisse dargestellt.

Das Licht der Lichtquelle 2 wird in die zumindest eine optische Faser 4 eingekoppelt. Das Licht passiert die Bifurkation 45, welche beispielsweise durch einen Schmelzkoppler, einen Faserkoppler oder einen 3dB-Koppler gebildet werden kann und trifft auf den Längsabschnitt 41, welcher mit einer Teilbeschichtung 51 versehen ist, welche dazu führt, dass die Brechzahl für rotes Licht gegenüber den verbleibenden Längsabschnitten reduziert ist. Alternativ oder zusätzlich kann die Faser 4 im ersten Längsabschnitt 41 einen geringeren Durchmesser aufweisen.

Sofern die optische Faser 4 geradlinig verläuft, wird das rote Licht gleichwohl durch Totalreflexion in der optischen Faser 4 geführt. Wird die optische Faser 4 jedoch im ersten Längsabschnitt 41 wie dargestellt gekrümmt, so kann das rote Licht in Abhängigkeit der Stärke der Krümmung aus der optischen Faser ausgekoppelt werden. Wie das neben dem ersten Längsabschnitt 41 dargestellte Spektrum zeigt, reduziert sich dadurch die Intensität des roten Lichtes, wohingegen grünes und blaues Licht weiterhin entlang der optischen Faser 4 propagiert.

In gleicher Weise ist der zweite Längsabschnitt 42 mit einer Teilbeschichtung 52 versehen, welche die Brechzahl für grünes Licht reduziert und rotes bzw. blaues Licht im Wesentlichen unverändert propagieren lässt. Somit wird im zweiten Längsabschnitt 42 die Intensität des grünen Lichtes in Abhängigkeit der Krümmung reduziert.

Im dritten Längsabschnitt 43 ist schließlich eine Teilbeschichtung 52 aufgebracht, welche die Brechzahl für blaues Licht reduziert und rotes und grünes Licht im Wesentlichen unbeeinflusst lässt. Somit kann im dritten Längsabschnitt 43 blaues Licht in Abhängigkeit von der Krümmung aus der optischen Faser 4 ausgekoppelt werden, sodass sich dessen Intensität in Abhängigkeit der Krümmung schwächt.

An dem der Lichtquelle 2 gegenüberliegenden Ende der optischen Faser 4 befindet sich eine Verspiegelung 35, beispielsweise in Form einer Metallisierung. Auftreffendes Licht wird dort reflektiert und im Anschluss daran erneut durch Totalreflexion in der optischen Faser 4 in die ursprüngliche Einkoppelrichtung zurückgeworfen.

An der Bifurkation 45 wird zumindest ein Teil des reflektierten, propagierendes Lichtes ausgekoppelt und zum Empfänger 3 geleitet. Der Empfänger 3 ist dazu eingerichtet, die Intensität des eintreffenden Lichtes für die drei Wellenlängen rot, grün und blau separat zu bestimmen. Hierzu können beispielsweise Farbfilter verwendet werden. In einigen Ausführungsformen der Erfindung kann der Empfänger 3 ein an sich bekannter Bildsensor sein, welcher beispielsweise als Zeilen- oder Flächen-CCD-Sensor oder als CMOS-Sensor ausgeführt ist. Dieser weist eine Mehrzahl von Pixeln auf, welche jeweils Subpixel enthalten, welche für eine bestimmte Wellenlänge sensitiv sind.

Aus der jeweils gemessenen Intensität der Wellenlängen bzw. Wellenlängenbereiche rot, grün und blau kann somit nach Kalibrierung die Krümmung im ersten, zweiten und dritten Längsabschnitt 41, 42 und 43 der optischen Faser 4 absolut bestimmt werden. Verläuft die optische Faser 4 entlang eines flexiblen Gegenstandes, beispielsweise eines Fingers, eines Endoskops oder einer Leitung, so kann die Krümmung dieses Gegenstandes aus der gemessenen Intensität bestimmt werden, ohne dass ein aufwendiges Spektrometer notwendig ist.

Anhand der Figur 2 wird eine zweite Ausführungsform der Erfindung näher erläutert. Gleiche Bestandteile der Erfindung sind mit gleichem Bezugszeichen versehen, sodass sich die nachfolgende Beschreibung auf die wesentlichen Unterschiede beschränkt.

Wie aus Figur 2 ersichtlich ist, sind die Lichtquelle 2 und der Empfänger 3 an unterschiedlichen Enden der optischen Faser 4 angeordnet. Die Bifurkation 45 kann in dieser Ausführungsform der Erfindung entfallen. Licht einer vorgebbaren bzw. bekannten Wellenlängenverteilung wird von der Lichtquelle 2 am ersten Ende der optischen Faser 4 eingekoppelt. In Abhängigkeit der Krümmung im ersten, zweiten und dritten Längsabschnitt 41, 42 und 43 werden einzelne Wellenlängen bzw. Wellenlängenbereiche geschwächt und die sich daraus ergebende Intensitätsverteilung im Empfänger 3 erfasst. Das Licht der Lichtquelle 2 gelangt somit nach einem einzigen Durchlauf durch die optische Faser 4 zum Empfänger 3.

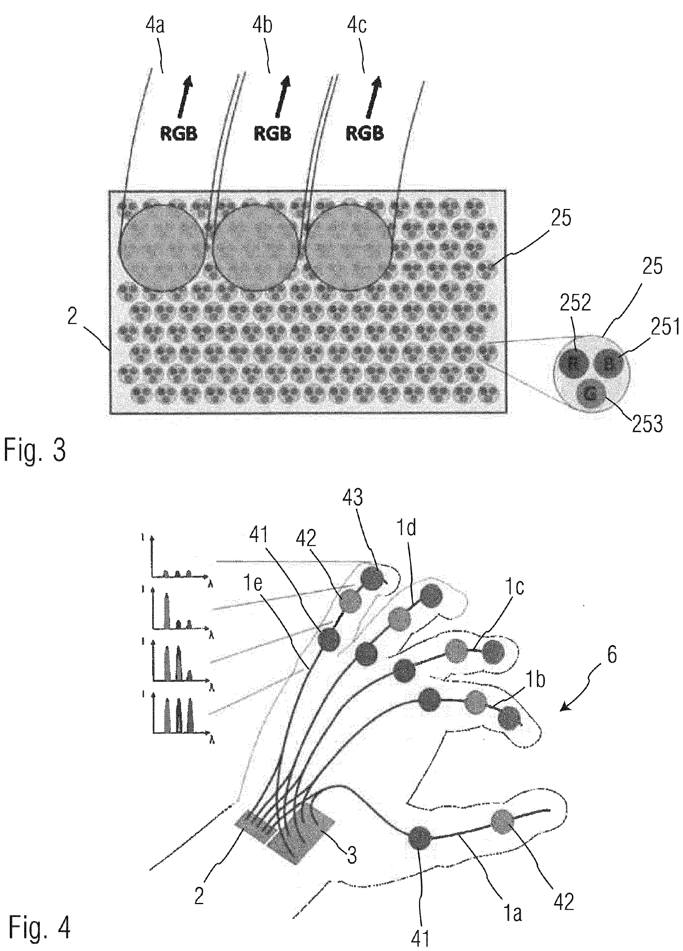

Figur 3 zeigt nochmals die Ankopplung der optischen Faser 4 an die Lichtquelle 2. Zur Überwachung der Krümmung einer Mehrzahl von Gegenständen kann eine Mehrzahl optischer Fasern 4 verwendet werden. In Figur 3 sind beispielshaft drei optische Fasern 4a, 4b und 4c dargestellt.

Die Lichtquelle 2 enthält im dargestellten Ausführungsbeispiel einen an sich bekannten Displaychip, welcher beispielsweise als Anzeigeelement in Mobiltelefonen, Kleincomputern, Automobilen oder anderen elektronischen Geräten Verwendung findet. Die Lichtquelle bzw. der Displaychip 2 enthält eine Mehrzahl von Pixeln 25. Jedes Pixel 25 enthält drei Subpixel 251, 252 und 253, welche jeweils Licht einer vorgebbaren Wellenlänge emittieren. Im dargestellten Ausführungsbeispiel sendet das erste Subpixel 251 blaues Licht aus, das zweite Subpixel 252 sendet rotes Licht aus und das dritte Subpixel 253 sendet grünes Licht aus. Auf diese Weise kann das Pixel 25 weißes Licht emittieren, oder bei entsprechender Anpassung der Intensität der Subpixel, Licht einer Mischfarbe.

Die einzelnen Pixel 25 weisen im dargestellten Ausführungsbeispiel eine so geringe Größe auf, dass das Licht mehrerer Pixel 25 in eine einzelne optische Faser 4 eingekoppelt wird. Hierdurch steigt die Intensität des Lichtes an, sodass eine zuverlässige Auslese der Krümmung ermöglicht wird.

In gleicher Weise wie in Figur 3 für die Lichtquelle 2 gezeigt ist, kann auch die Ankopplung eines Empfängers 3 erfolgen, wenn der Empfänger 3 einen an sich bekannten Bildsensor enthält, beispielsweise einen CCD-Sensor, einen CMOS-Sensor oder ein anderes lichtempfindliches Element, welches eine Mehrzahl von Pixeln aufweist, welche eine wellenlängenaufgelöste Intensität durch die Untergliederung in Subpixel erfassen können.

Anhand der Figur 4 wird die Anwendung der Erfindung anhand eines Datenhandschuhs 6 erläutert. Der Datenhandschuh 6 ist ein Eingabegerät in Form eines Handschuhs. Dieser wird von einem Benutzer getragen und digitalisiert die Bewegung der Finger. Die Bewegung der Hand bzw. einzelner Finger kann sodann zur Steuerung eines Computerprogramms Verwendung finden.

Hierzu weist der Datenhandschuh 6 einen an sich bekannten Fingerhandschuh aus einem Gewebe oder Gestricke auf. Im Material des Handschuhs 6 sind faseroptische Sensoren 1a, 1b, 1c, 1d und 1e eingebracht. Dies kann durch Einweben, Verschweißen oder Verkleben der optischen Fasern erfolgen. Bevorzugt enthalten die optischen Fasern der faseroptischen Sensoren 1a, 1b, 1c, 1d und 1e Polymerfasern, welche eine vergleichsweise große Dehnbarkeit aufweisen und somit beim Abwinkeln von Fingergelenken nicht überdehnt und dadurch beschädigt werden.

Die vier optischen Fasern 1b, 1c, 1d und 1e weisen jeweils drei Längsabschnitte 41, 42 und 43 auf, an welchen die Krümmung bestimmt wird. Hierzu ist in den jeweiligen Längsabschnitten 41, 42 und 43 eine Teilbeschichtung aufgebracht, welche die Brechzahl für Licht einer vorgebbaren Wellenlänge reduziert, wie dies anhand der Figur 1 bereits ausführlich dargestellt wurde. Die jeweiligen Längsabschnitte 41, 42 und 43 sind innerhalb der optischen Fasern so angeordnet, dass diese in etwa an den Fingergelenken zu liegen kommen. Somit kann die Krümmung der jeweiligen Fingergelenke erfasst werden.

Aufgrund der Anatomie der menschlichen Hand enthält der faseroptische Sensor 1a, welcher die Krümmung des Daumens erfasst, lediglich zwei Längsabschnitte 41 und 42. Die Erfassung der Krümmung eines dritten Längsabschnittes kann in diesem Fall entfallen.

Weiterhin ist aus Figur 4 ersichtlich, wie in den Handschuh eine Lichtquelle 2 und ein Empfänger 3 integriert sind. Somit kann über die jeweils verwendete optische Faser die Beugung des jeweiligen Fingers diskriminiert werden, wobei die einzelnen Gelenke des Fingers im Wellenlängenmultiplex erfasst werden. Die Bewegung unterschiedlicher Finger kann durch die Räumliche Trennung der Pixel des Empfängers erfolgen. Somit erlaubt die Erfindung in einfacher Weise die Digitalisierung der Handbewegung ohne Verwendung mechanischer Komponenten und ohne Einsatz eines aufwendigen Spektrometers, welches für bekannte faseroptische Krümmungssensoren notwendig ist.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Datenhandschuh (6) mit zumindest einem faseroptischen Sensor (1) zur Digitalisierung der Bewegung der Finger, mit zumindest einer Lichtquelle (2), zumindest einer optischen Faser (4) und zumindest einem Empfänger (3), **dadurch gekennzeichnet, dass**
die optische Faser (4) zumindest einen Längsabschnitt (41, 42, 43) aufweist, in welchem die Brechzahl für Licht einer vorgebbaren Wellenlänge gegenüber den verbleibenden Längsabschnitten reduziert ist, wobei die Reduktion der Brechzahl durch Teilbeschichtung (51, 52, 53) einer Außenfläche der optischen Faser (4) erfolgt.

2. Datenhandschuh nach Anspruch 1, **dadurch gekennzeichnet, dass** die Teilbeschichtung (51, 52, 53) Nanopartikel enthält oder daraus besteht und/oder
dass die Teilbeschichtung (51, 52, 53) Nanopartikel enthält oder daraus besteht, welche Gold enthalten oder daraus bestehen und/oder
dass die Teilbeschichtung (51, 52, 53) Nanopartikel enthält oder daraus besteht, welche einen Durchmesser von etwa 1 nm bis etwa 300 nm oder von etwa 50 nm bis etwa 200 nm aufweisen.

3. Datenhandschuh nach einem der Ansprüche 1 bis 2, **dadurch gekennzeichnet, dass** die optische Faser (4) eine Multimode-Faser ist und/oder
dass die optische Faser (4) eine Polymerfaser ist.

4. Datenhandschuh nach einem der Ansprüche 1 bis 3, **dadurch gekennzeichnet, dass** die optische Faser (4) zumindest einen ersten Längsabschnitt (41) und zumindest einen zweiten Längsabschnitt (42) aufweist, an welchen jeweils eine Teilbeschichtung aufgebracht ist, welche die Brechzahl für Licht einer vorgebbaren Wellenlänge reduziert.

5. Datenhandschuh nach einem der Ansprüche 1 bis 4, **dadurch gekennzeichnet, dass** die Lichtquelle (2) ein Farbdisplay mit einer Mehrzahl von Pixeln (25) enthält oder daraus besteht.

6. Datenhandschuh nach einem der Ansprüche 1 bis 5, **dadurch gekennzeichnet, dass** der Empfänger (3) einen Bildsensor enthält oder daraus besteht.

7. Datenhandschuh nach einem der Ansprüche 1 bis 6, **dadurch gekennzeichnet, dass** die optische Faser (4) eine Bifurkation (45) aufweist.

8. Datenhandschuh nach einem der Ansprüche 1 bis 7, **dadurch gekennzeichnet, dass** ein Ende der optischen Faser (4) verspiegelt ist.

9. Datenhandschuh nach einem der Ansprüche 1 bis 8, **dadurch gekennzeichnet, dass** dieser vier faseroptische Sensoren (1b, 1c, 1d) enthält, welche jeweils drei Längsabschnitte (41, 42, 43) aufweisen, in welchen eine Teilbeschichtung aufgebracht ist, wobei die drei Längsabschnitte (41, 42, 43) so angeordnet sind, dass diese in etwa an den Fingergelenken zu liegen kommen, wenn ein Benutzer den Datenhandschuh (6) trägt.

10. Datenhandschuh nach einem der Ansprüche 1 bis 9, **dadurch gekennzeichnet, dass** der zumindest eine faseroptische Sensor (1) durch Einweben oder Verschweißen oder Verkleben in das Material des Datenhandschuhs (6) eingebracht ist.

11. Datenhandschuh nach einem der Ansprüche 9 oder 10,
**dadurch gekennzeichnet, dass** dieser weiterhin einen fünften faseroptischen Sensor (1a) enthält, welcher zwei Längsabschnitte (41, 42) aufweist, in welchen eine Teilbeschichtung aufgebracht ist.

12. Verfahren zur Steuerung eines Computerprogramms mittels eines Datenhandschuhs nach einem der Ansprüche 1 bis 11, bei welchem Licht aus zumindest einer Lichtquelle (2) in zumindest eine optische Faser (4) eingekoppelt und mit zumindest einem Empfänger (3) ausgewertet wird, **dadurch gekennzeichnet, dass**
die optische Faser (4) zumindest einen Längsabschnitt (41, 42, 43) aufweist, in welchem die Brechzahl für Licht einer vorgebbaren Wellenlänge gegenüber den verbleibenden Längsabschnitten durch Teilbeschichtung (51, 52, 53) einer Außenfläche der optischen Faser (4) reduziert ist und der Empfänger die Intensität des Lichtes dieser vorgebbaren Wellenlänge erfasst.

13. Verfahren nach Anspruch 12, **dadurch gekennzeichnet, dass** die Lichtquelle (2) Licht unterschiedlicher Wellenlängen emittiert und die Krümmung an unterschiedlichen Orten der optischen Faser (4) im Wellenlängenmultiplex erfasst wird.

## Claims

1. Data glove (6) having at least one fiber-optic sensor (1) for digitizing the movement of the fingers, comprising at least one light source (2), at least one optical fiber (4) and at least one receiver (3), **characterized in that**
the optical fiber (4) has at least one longitudinal portion (41, 42, 43) in which the refractive index for light at a predeterminable wavelength is reduced with respect to the remaining longitudinal portions, the refractive index being reduced by partial coating (51, 52, 53) of an outer surface of the optical fiber (4).

2. Data glove according to claim 1, **characterized in that** the partial coating (51, 52, 53) contains or consists of nanoparticles and/or in that the partial coating (51, 52, 53) contains or consists of nanoparticles which contain or consist of gold and/or in that the partial coating (51, 52, 53) contains or consists of nanoparticles which have a diameter of about 1 nm to about 300 nm or of about 50 nm to about 200 nm.

3. Data glove according any one of claims 1 to 2, **characterized in that** the optical fiber (4) is a multimode fiber and/or
**in that** the optical fiber (4) is a polymer fiber.

4. Data glove according to any one of claims 1 to 3, **characterized in that** the optical fiber (4) has at least a first longitudinal portion (41) and at least a second longitudinal portion (42), both of which are provided with a partial coating which reduces the refractive index for light at a predeterminable wavelength.

5. Data glove according to any one of claims 1 to 4, **characterized in that** the light source (2) contains or consists of a colour display having a plurality of pixels (25).

6. Data glove according to any one of claims 1 to 5, **characterized in that** the receiver (3) contains or consists of an image sensor.

7. Data glove according to any one of claims 1 to 6, **characterized in that** the optical fiber (4) has a bifurcation (45).

8. Data glove according to any one of claims 1 to 7, **characterized in that** one end of the optical fiber (4) is mirrored.

9. Data glove according to any one of claims 1 to 8, **characterized in that** it contains four fiber-optic sensors (1b, 1c, 1d), each of which has three longitudinal portions (41, 42, 43), which are provided with a partial coating, the three longitudinal portions (41, 42, 43) being arranged in such a way that they come to rest approximately against the finger joints when a user wears the data glove (6).

10. Data glove according to any one of claims 1 to 9, **characterized in that** the at least one fiber-optic sensor (1) is incorporated into the material of the data glove (6) by weaving it therein or welding or adhering it thereto.

11. Data glove according to any one of claims 9 or 10, **characterized in that** it also contains a fifth fiber-optic sensor (1a) which has two longitudinal portions (41, 42) which are provided with a partial coating.

12. Method for controlling a computer program by means of a data glove according to any one of claims 1 to 11, in which light from at least one light source (2) is coupled into at least one optical fiber (4) and is assessed by means of at least one receiver (3), **characterized in that**
the optical fiber (4) has at least one longitudinal portion (41, 42, 43) in which the refractive index for light at a predeterminable wavelength is reduced with respect to the remaining longitudinal portions by partial coating (51, 52, 53) of an outer surface of the optical fiber (4) and the receiver detects the intensity of the light at this predeterminable wavelength.

13. Method according to claim 12, **characterized in that** the light source (2) emits light at different wavelengths and the curvature is detected at different locations of the optical fiber (4) in the wavelength multiplex.

## Revendications

1. Gant de données (6) comprenant au moins un capteur à fibre optique (1) destiné à numériser le mouvement des doigts et pourvu d'au moins une source de lumière (2), d'au moins une fibre optique (4) et d'au moins un récepteur (3),
**caractérisé en ce que** la fibre optique (4) présente au moins une partie longitudinale (41, 42, 43) dans laquelle l'indice de réfraction pour la lumière d'une longueur d'onde prédéfinissable est réduit par rapport à celui des parties longitudinales restantes, la réduction de l'indice de réfraction étant réalisée par un revêtement partiel (51, 52, 53) d'une surface extérieure de la fibre optique (4).

2. Gant de données selon la revendication 1,
**caractérisé en ce que** le revêtement partiel (51, 52, 53) contient ou est constitué de nanoparticules, et/ou
**en ce que** le revêtement partiel (51, 52, 53) contient ou est constitué de nanoparticules qui contiennent ou sont constituées d'or, et/ou en ce que le revêtement partiel (51, 52, 53) contient ou est constitué de nanoparticules qui présentent un diamètre d'environ 1 nm à environ 300 nm ou d'environ 50 nm à environ 200 nm.

3. Gant de données selon l'une des revendications 1 à 2,
**caractérisé en ce que** la fibre optique (4) est une fibre multimode, et/ou en ce que la fibre optique (4) est une fibre polymère.

4. Gant de données selon l'une des revendications 1 à 3,
**caractérisé en ce que** la fibre optique (4) présente au moins une première partie longitudinale (41) et au moins une deuxième partie longitudinale (42), sur chacune desquelles est appliqué un revêtement partiel qui réduit l'indice de réfraction pour la lumière d'une longueur d'onde prédéfinissable.

5. Gant de données selon l'une des revendications 1 à 4,
**caractérisé en ce que** la source de lumière (2) comprend ou est constituée d'un écran couleur ayant une pluralité de pixels (25).

6. Gant de données selon l'une des revendications 1 à 5,
**caractérisé en ce que** le récepteur (3) comprend ou est constitué d'un capteur d'image.

7. Gant de données selon l'une des revendications 1 à 6,
**caractérisé en ce que** la fibre optique (4) présente une bifurcation (45).

8. Gant de données selon l'une des revendications 1 à 7,
**caractérisé en ce qu'**une extrémité de la fibre optique (4) est rendue réfléchissante.

9. Gant de données selon l'une des revendications 1 à 8,
**caractérisé en ce qu'**il comprend quatre capteurs à fibre optique (1b, 1c, 1d) présentant chacun trois parties longitudinales (41, 42, 43) dans lesquelles est déposé un revêtement partiel, les trois parties longitudinales (41, 42, 43) étant disposées de manière à venir se placer sensiblement au niveau des articulations des doigts lorsqu'un utilisateur porte le gant de données (6).

10. Gant de données selon l'une des revendications 1 à 9,
**caractérisé en ce que** ledit au moins un capteur à fibre optique (1) est incorporé dans le matériau du gant de données (6) par tissage ou soudage ou collage.

11. Gant de données selon l'une des revendications 9 ou 10,
**caractérisé en ce qu'**il comprend en outre un cinquième capteur à fibre optique (1a) qui présente deux parties longitudinales (41, 42) dans lesquelles est appliqué un revêtement partiel.

12. Procédé de commande d'un programme informatique au moyen d'un gant de données selon l'une des revendications 1 à 11,
dans lequel de la lumière provenant d'au moins une source de lumière (2) est injectée dans au moins une fibre optique (4) et est exploitée avec au moins un récepteur (3),
**caractérisé en ce que**
la fibre optique (4) présente au moins une partie longitudinale (41, 42, 43) dans laquelle l'indice de réfraction pour la lumière d'une longueur d'onde prédéfinissable est réduit par rapport à celui des parties longitudinales restantes par un revêtement partiel (51, 52, 53) d'une surface extérieure de la fibre optique (4), et le récepteur détecte l'intensité de la lumière de cette longueur d'onde prédéfinissable.

13. Procédé selon la revendication 12,
**caractérisé en ce que** la source de lumière (2) émet de la lumière de différentes longueurs d'onde, et la courbure est détectée à différents endroits de la fibre optique (4) par multiplexage en longueurs d'onde.
